(19) **Europäisches Patentamt**

**European Patent Office**

**Office européen des brevets**

(11) **EP 1 342 050 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(21) Anmeldenummer: **01983459.7**

(22) Anmeldetag: **31.08.2001**

(51) Int Cl.:
***G01B 21/04*** (2006.01)

(86) Internationale Anmeldenummer:
**PCT/EP2001/010066**

(87) Internationale Veröffentlichungsnummer:
**WO 2002/027268 (04.04.2002 Gazette 2002/12)**

(54) **ERMITTLUNG VON KORREKTURPARAMETERN EINER DREH- SCHWENKEINHEIT MIT MESSENDEM SENSOR ( KOORDINATENMESSGERÄT ) ÜBER ZWEI PARAMETERFELDER**

DETERMINATION OF CORRECTION PARAMETERS OF A ROTATING SWIVEL UNIT BY MEANS OF A MEASURING SENSOR (DEVICE FOR MEASURING CO-ORDINATES) OVER TWO PARAMETER FIELDS

DETERMINATION DE PARAMETRES DE CORRECTION D'UNE UNITE ARTICULEE ROTATIVE AU MOYEN D'UN CAPTEUR EFFECTUANT DES MESURES (APPAREIL DE MESURE DE COORDONNEES) SUR DEUX CHAMPS DE PARAMETRES

(84) Benannte Vertragsstaaten:
**DE FR GB IT**

(30) Priorität: **28.09.2000 DE 10048095**
**28.09.2000 DE 10048096**

(43) Veröffentlichungstag der Anmeldung:
**10.09.2003 Patentblatt 2003/37**

(73) Patentinhaber: **Carl Zeiss Industrielle Messtechnik GmbH**
**73447 Oberkochen (DE)**

(72) Erfinder: **LOTZE, Werner**
**01309 Dresden (DE)**

(74) Vertreter: **Henckell, Carsten**
**Carl Zeiss**
**Patentabteilung**
**73446 Oberkochen (DE)**

(56) Entgegenhaltungen:
**EP-A2- 1 126 237       DE-A- 19 618 283**

**EP 1 342 050 B1**

**Beschreibung**

Die Anmeldung betrifft ein Verfahren zur Ermittlung von Korrekturparametern einer Dreh-Schwenkeinheit, sowie eine entsprechende Dreh-Schwenheinkeit.

Ein derartiges Verfahren ist beispielsweise aus dem europäischen Patent EP 0 317 967 B1 und dem korrespondierenden US-Patent US 4,888,877 bekannt. Hierin ist eine Dreh-Schwenkeinheit mit zwei motorisch verstellbaren Drehgelenken mit zugehörigen Winkelencodern beschrieben, deren Drehachsen jeweils senkrecht aufeinander stehen. Die Drehgelenke der Dreh-Schwenkeinheit weisen ein reproduzierbares Laufverhalten auf. Um nunmehr die Drehgelenke der Dreh-Schwenkeinheit in beliebige Drehstellungen bringen zu können ohne erneut den Sensor kalibrieren zu müssen, werden für die Dreh-Schwenkeinheit Korrekturwerte ermittelt, die Winkelpositionsabweichungen und/oder die Lage der Drehachsen zueinander und/oder Laufabweichungen der Drehachsen beschreiben. Zur Ermittlung der Achslage wird hierin unter anderem vorgeschlagen an der Dreh-schwenkeinheit einen raumschräg ausgerichteten Taststift zu befestigen und diesen um jeweils, eine der Drehachsen in eine Vielzahl von Winkelstellungen zu bewegen und die hieran befestigte Tastkugel in der betreffenden Winkelstellung zu vermessen. Die Lage der betreffenden Drehachse ergibt sich dann als Normale auf eine bestmöglich an die Meßpunkte angepaßte Kreisebene durch den Mittelpunkt des Kreises. Außerdem können, wie eben ausgeführt, ferner Winkelpositionsabweichungen und/oder Laufabweichungen der Drehachsen korrigiert werden. Zur Aufnahme der entsprechenden Korrekturwerte wird vorgeschlagen an der Dreh-Schwenkeinheit Platten mit vier Kugeln zu befestigen und für eine Vielzahl von Drehstellungen die Mittelpunkte der Kugeln zu messen. Aus den gemessenen Mittelpunkten der Kugeln können dann für jede Drehstellung entsprechende Korrekturwerte ermittelt werden, die dann zusätzlich zur Korrektur verwendet werden.

Die Besonderheit dieses Verfahrens ist darin zu sehen, daß zur Aufnahme der Korrekturwerte an der Dreh-Schwenkeinheit die ranmschräg befestigte Tastkugel, sowie die Platten mit den vier Kugeln befestigt werden müssen und zur Aufnahme der Meßwerte die Dreh-Schwenkeinheit auf einem Koordinatenmeßgerät befestigt werden muß, das dann die Meßwerte zur Ermittlung der Korrekturparameter aufnimmt

Aus der Deutschen Offenlegungsschrift DE 196 18 283 A1 ist ein Verfahren bekannt, um einen optischen Sensor zu kalibrieren. Der optische Sensor ist hierbei über eine Dreh-Schwenkeinheit mit dem Meßann des Koordinatenmeßgerätes verbunden, über die der Sensor in zwei aufeinander senkrecht stehenden Drehachsen verdreht werden kann. Der Sensor selber umfaßt eine Beleuchtungseinheit, die einen Laserstrahl linienförmig aufgefächert auf ein zu vermessendes Werkstück projiziert sowie eine Videokamera, die das linienförmige Muster nach dem Lasertriangulationsprinzip auswertet.

Damit die von der Videokamera aufgenommenen Meßwerte in das Maschinenkoordinatensystem transformiert werden können, wird sowohl eine Rotadonsmatrix bestimmt, die die Rotation des Sensorkoordinatensystem in das Maschinenkoordinatensystem beschreibt, sowie ein Vektor bestimmt, der die Ablage des Ursprunges des Sensorkoordinatensystems gegenüber einem im Maschinenkoordinatensystem bekannten Auhängepunkt der Dreh-Schwenkeinheit beschreibt. Über die Rotationsmatrix und den Ablagevektor kann dann jeder vom optischen Sensor gemessene Punkt in das Maschinenkoordinatensystem transformiert werden.

Um die Rotationsmatrix und den Atilagevektor zu bestimmen wird ein würfelförnaiger Prüfkörper vorgesehen, der zuvor durch einen mechanischen Tastkopf exakt in das Maschinenkoordinatensystem eingemessen wurde. Der Prüfkörper weist zentral auf den abzutastenden Flächen eine Bohrung auf. Die Z-Achse wird beim optischen Sensor hierbei willkürlich als optische Achse der Videokamera definiert. Um die Ausrichtung der z-Achse des Sensorkoordinatensystems zu bestimmen, wird der optische Sensor näherungsweise entlang dieser Z- Achse verfahren und zwar so, daß in den unterschiedlichen Stellungen die Bohrung immer in die Mitte des Bildes geholt wird. Analog wird für die y-Achse des Sensorkoordinatensystems vorgegangen. Hierdurch wird die Ausrichtung der z-Achse und der y-Achse und mithin auch der x-Achse genau definiert und es können folglich die Parameter der Rotationsmatrix zur Rotation des Sensorkoordinatensystem in das Maschinenkoordinatensystem und des Vektors, der die Ablage des Ursprunges des Sensorkoordinatensystems gegenüber dem Punkt im Maschinenkoordinatensystem definiert, berechnet werden.

Außerdem ist aus dem nach dem Prioritätsdatum der vorliegenden Anmeldung veröffentlichten Dokument EP-A-1 126 237 bekannt, Korrekturparameter einer Dreh-Schwenkeinheit zu bestimmen. Hierzu werden in diversen Drehstellungen eines Drehgelenks Sensorkalibrierungen durchgeführt und zwei Parameterfelder berechnet, die die Transformation des Sensorkoordinatensystems in das Maschinenkoordinatensystem sowie die Ablage des Ursprungs des Sensorkoordinatensystems gegenüber einem Punkt im Maschinenkoordinatensystem beschreiben.

Aufgabe ist es, ausgehend von dem vorveröffentlichten Stand der Technik ein einfach durchzufuhrendes Verfahren vorzuschlagen, mit dem Korrekturparameter einer Dreh-Schwenkeinheit bestimmt werden können, sowie eine entsprechende Dreh-Schwenkeinheit.

Die Aufgabe wird gelöst durch die Merkmale der unabhängigen Ansprüche 1 und 8. Die Besonderheit dieses Verfahrens ist hierbei darin zu sehen, daß zur Aufnahme der Korrekturwerte ein in wenigstens einer Dimension messender Sensor an der Dreh-Schwenkeinheit befestigt wird, wobei für wenigstens drei Drehstellungen des Drehgelenkes eine Kalibrierung des Sensors an einem Kalibrierkörper durchgefQhrt wird, bei der wenigstens Parameter eines ersten Parameterfeldes berechnet werden, das die Transformation eines Sensorkoordinatensystems in das Maschinenkoordinatensystem beschreibt und Parameter eines weiteren Parameterfeldes berechnet werden, das die Ablage des Sensorkodrdinatensystems gegenüber einem Punkt im Maschinenkoordinatensystem beschreibt. Aus diesen ermittelten Parametern werden dann die Parameter von Korrekturparameterfeldern des Drehgelenkes abgeleitet.

Hierdurch ergibt sich der besondere Vorteil, daß an dem Drehgelenk, für das die Korrekturparameter aufgenommen werden sollen nicht mehr, wie oben beschrieben, eine Hilfskonstruktion, wie die raumschräg ausgerichtete Kugel und/oder die Platte mit den vier Kugeln befeegt werden muß sondern daß unmittelbar der Sensorzur-Aubahme der Korrekturwerte verwendet weiden kann. Außerdem muß die Dreh-Schwenkeinheit zur Aufnahme der Korrekwrwerte nicht mehr separat auf einem Koordinatenmeßgerät als Werkstück aufgespannt und vermessen werden. Vielmehr kann die Dreh-Schwenkeinheit unmittelbar am Meßwm des Koordinatenmeßgerätes befestigt werden, und in dieser Position die Korrekturwerte aufgenommen werden.

Als Sensor könnte hierbei prinzipiell jeder in wenigstens einer Dimension messende Sensor verwendet werden. Beispielsweise könnte ein berührend arbeitender messender Tastkopf verwendet werden, der über entsprechende Wegaufiaehmer die Auslenkung eines Taststiftes gegenüber dem Tastkopf in den drei Koordinateinrichtungen mißt Es kann jedoch genauso ein in ein oder zwei Dimensionen messender optischer Triangulationstaster verwendet werden.

Auch die Art der Dreh-Schwenkeinheit kann sehr unterschiedlich ausgestaltet sein. Es kann sich um eine Dreh-Schwenkeinheit mit kontinuierlich verstellbaren Drehgelenken handeln, mit der jeder beliebige Drehwinkel eingestellt werden kann, wie dies aus dem europäischen Patent EP 0 317 967 B1 und dem korrespondierenden US-Patent US 4,888,877 beschrieben ist. Es ist natürlich genauso möglich eine sogenannte rastende Dreh-Schwenkeinheit zu verwenden, bei der nur diverse, fest vordefinierte Rastpositionen mit den Drehgelenken eingenommen werden können.

Die Korrekturparameter können die Lage der Drehachsen zueinander und/oder Winkelpositionsabweichungen und/öder Laufabweichungen der Drehachsen umfassen.

Um bei der Kalibrierung möglichst wenige Fehlereinflüsse zu haben sollte die Drehachse desjenigen Drehgelenkes, für das die Korrekturparameter aufgenommen werden, bei der Kalibrierung des Sensors vertikal ausgerichtet sein, so daß sich das betreffende Drehgelenk möglichst nicht verbiegt.

Um die Meßfehler möglichst gering zu halten sollten bei der Kalibrierung Meßwerte verwendet werden, die weitgehend gleichmäßig über den gesamten Meßbereich des Sensors verteilt sind.

Das Verfahren läßt sich besonders geeignet für das Drehgelenk dmchiühren, an dem der Sensor unmittelbar befestigt ist. Natürlich können prinzipiell aber auch alle anderen Drehgelenke der Dreh-Schwenkeinheit entsprechend korrigiert' werden.

Bei der Kortekthreinheit, die der Dreh-Schwenkeinheit zugeordnet ist und in der die Meßwerte entsprechend der Stellung der Drehgelenke korrigiert werden handelt es sich üblicherweise um die Steuer- und Auswerteeinheit des Koordinatenmeßgerätes, mit der die Meßabläufe gesteuert werden und die Meßdaten ausgewertet werden. Diese Steuer- und Auswerteeinheit umfaßt üblicherweise einen Auswerterechner, der über einen Bus mit einer Steuerung des Koordinatenmeßgerätes verbunden ist In neuerer Zeit gibt es auch Steuer- und Auswerteeinheiten, bei denen die Steuerung, die weitgehend in Echtzeit mit den Antrieben und den MeBwertaufnehmern des Koordinatenmeßgerätes interagieren muß mit in den Auswerterechner integriert ist

Bei dem ersten Parameterfeld, das die Transformation des Sensorkoordinatensystems in das Maschinenkoordinatensystem angibt handelt es sich in der Regel um eine dreizeilige Matrix, die auch als Sensormatrix bezeichnet wird. Die Anzahl der notwendigen Spalten variiert mit der Anzahl der mit dem Sensor meßbaren Dimensionen.

Bei dem zweiten Parameterfeld, das die Ablage des Sensorkoordinatensystems (u,v,w) gegenüber einem Punkt (AB) im Maschinenkoordinatensystem $(X_M, Y_M, Z_M)$ beschreibt, handelt es sich um einen Vektor, wobei der Punkt (AB) ein bekannter Punkt im Maschinenkoordinatensystem $(X_M, Y_M, Z_M)$ sein muß, gegenüber dem der Ursprung des Sensorkoordinatensystems (u,v,w) eine feste räumliche Lage hat. Dieser Punkt muß deshalb irgendwo im MeBarm definiert sein, an dem der Sensor befestigt ist. Natürlich ändert dieser Punkt (AB) seine Lage gegenüber dem Ursprung des Maschinenkoordinatensystems, wenn die Mechanik des Koordinatenmeßgerätes in den drei Koordinatenrichtungen verstellt wird. Als geeigneter Punkt könnte beispielsweise die sogenannte Einbaulage einer Dreh-Schwenkeinheit verwendet werden, die die Lage der Drehachse des dem Meßarm am nächsten liegenden Drehgelenkes beschreibt Genauso gut könnte jedoch ein beliebiger anderer Punkt im Meßarm definiert werden.

Die Ermittlung dieser Parameter könnte entweder wie in der Deutschen Offenlegungsschrift DE 196 18 283 A1 beschrieben ausgeführt werden oder aber besonders Vorteilhaft, wie unten im Zusammenhang mit der Figurenbeschreibung beschrieben.

Weitere Vorteile und Weiterbildungen der Erfindung ergeben sich aus der nachfolgenden Figurenbeschreibung. Hierin zeigen:

Figur 1:  ein Koordinatenmeßgerät mit einem optischen zweidimensional messenden Sensor (9), der über eine Dreh-Schwenkeinheit (13) mit drei Drehgelenken am Meßarm (4) des Koordkatemeßgerätes Befestigt ist

Figur 2:  optischer Sensor(9) gemäß Figur 1 beim Abtasten einer Kalibrierkugel (12)

Figur 3:    Prinzipskizze des optischen Sensor (9) gemäß Figur 1 in der Seitenansicht

Figur 4:    eine Skizze zur Verdeutlichung der Lage des Sensorkoordinatensystems (u,v,w) des optischen Sensors (9).

Figur 5:    eine Skizze zur Verdeutlichung des Verfahrens der Aufnahme der Korrekturwerte

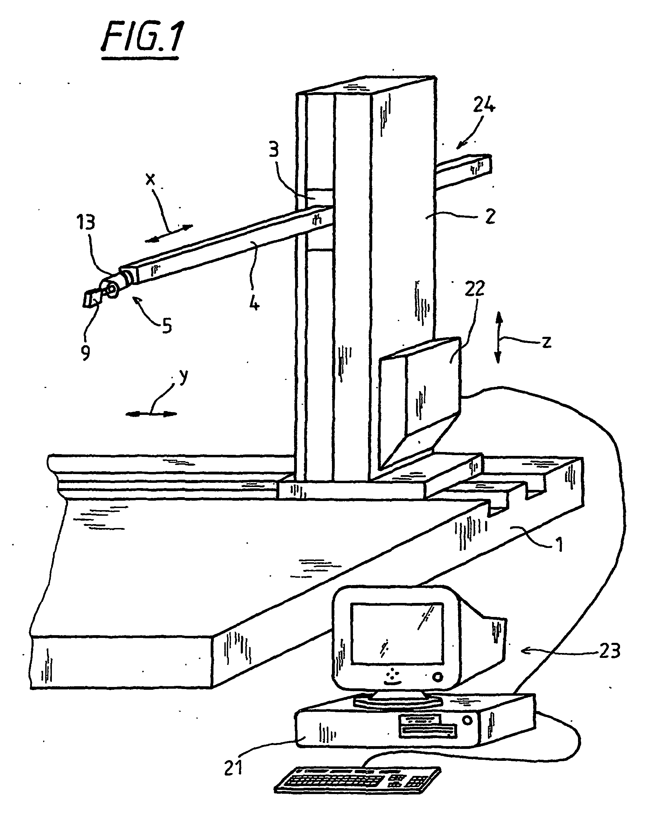

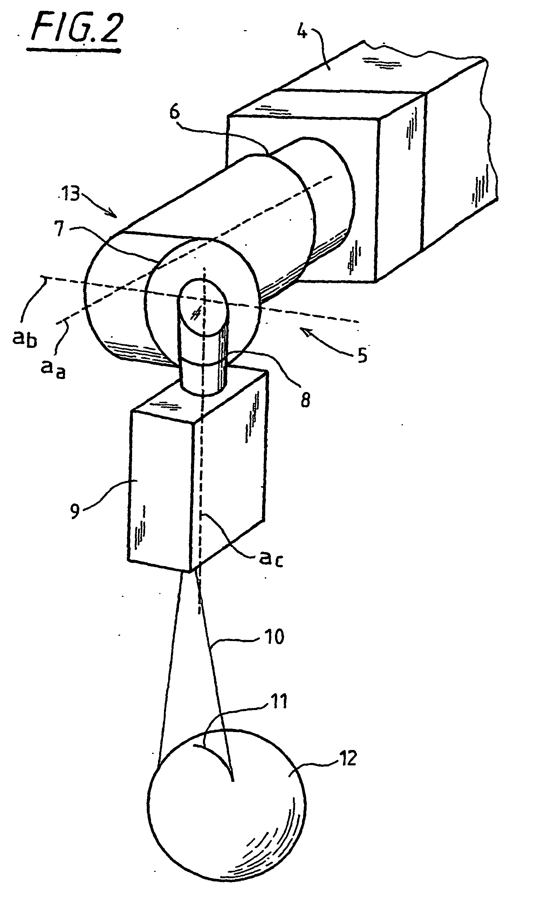

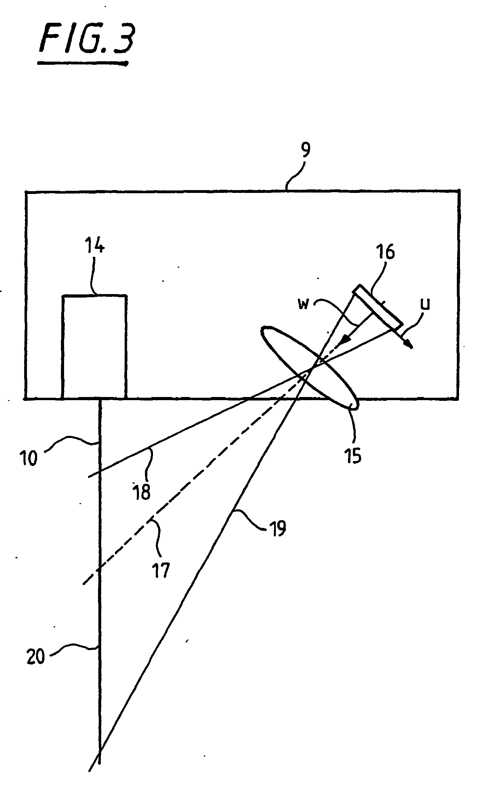

Figur 1 zeigt ein Koordinatenmeßgerät in sogenannter Ständerbauweise in einer perspektivischen Ansicht mit einer Sensorik (5) die einen optischen zweidimensional messenden Sensor (9) sowie eine Dreh-Schwenkeinheit (13) mit drei Drehgelenken (6,7,8) umfaßt, wie dies noch weiter unten im Zusammenhang mit den Figuren 2 und 3 erläutert werden wird.

Das Koordinatenmeßgerät umfaßt hierbei eine Mechanik (24) über die die Sensorik in den Koordinatenrichtungen (X,Y,Z) verstellt werden kann. Diese Mechanik (24) umfaßt einen Ständer (2); der über Führungen in der mit dem Pfeil (y) bezeichneten Richtung auf dem Meßtisch (1) verfahren werden kann. An dem Ständer (2) ist in der mit dem Pfeil (z) bezeichneten Richtung ein Kreuzschieber (3) verschieblich gelagert, an dem wiederum in der mit dem Pfeil (x) beschriebenen Richtung der Meßarm (4) verschieblich gelagert ist

Den einzelnen Führungen sind hierbei Maßstäbe mit entsprechenden Ableseköpfen zugeordnet, so daß in allen drei Koordinatenrichtungen (x,y,z) die jeweilige Position der Sensorik (5) bestimmt werden kann. Außerdem sind hier nicht näher zu sehende Antriebe vorgesehen, über die der Ständer (2), der Kreuzschieber (3), und der Meßarm (4) in den Koordinatenrichtungen (X,Y,Z) verfahren werden können. Als Steuer- und Auswerteeinheit (23) weist das Koordinatenmeßgerät hier beispielhaft einen Auswerterechner (21) auf, der der Erstellung vön Meßabläufcn und zur Auswertung der Meßdaten dient, sowie eine Steuerung (22) auf, die der Ansteuerung der. Antriebe und der Aufnahme der Meßdaten dient. Auswerterechner (21) und Steuerung (22) der Steuer- und Auswerteeinheit (23) sind die über einen Bus miteinander verbunden. In der Steuer- und Auswerteeinheit (23) werden insbesondere auch die gainzen nachfolgend beschriebenen Verfahren durchgeführt.

Mit der Sensorik (5) können hierbei Meßpunkte auf einem in Figur 1 nicht näher gezeigten Werkstück aufgenommen werden, wie dies im Zusammenhang mit Figur 2 näher erläutert werden soll, die die Sensorik (5) ebenfalls in einer perspektivischen Darstellung zeigt. Wie aus Figur 2 zu sehen ist, ist der Sensor (9) über eine Dreh-Schwenkeinheit (13) am Meßarm (4) des Koordinatenmeßgerätes befestigt Die Dreh-Schwenkeinheit (13) weist hierbei drei Drehgelenke (6,7,8) auf, die jeweils drei Drehachsen ($a_a$,$a_b$,$a_c$) definieren , wobei die Drehachse ($a_b$) des Drehgelenkes (7) senkrecht auf die Drehachse ($a_a$) des Drehgelenkes (6) steht und die Drehachse ($a_c$) des Drehgelenkes (8) wiederum senkrecht auf die Drehachse ($a_b$) des Drehgelenkes (7) steht. Somit kann der Sensor (9) beliebig im Raum verstellt werden. Die in diesem Ausführungsbeispiel verwendete Dreh-Schwenkeinheit (13) ist eigentlich eine Dreh-Schwenkeinheit mit nur zwei Drehgelenken (6,7) wie sie in dem US-Patent 4,888,877 und dem korrespondierenden Europäischen Patent 0 317 967 gezeigt ist. Auf das US-Patent 4,888,077 und das korrespondierende Europäische Patent 0 317 967 B1 wird hierbei ausdrucklich bezug genommen. Über die hieran befindliche Tastkopfwechseleinrichtung ist das dritte Drehgelenk (8) mit dem optischen Sensor (9) aufgenommen. Der Aufbau des Drehgelenkes (8) ist vollkommen analog zum Aufbau der entsprechenden Drehgelenke (6 und 7). Dies hat einen besonderen Vorteil. Dreh-Schwenkeinheiten mit zwei Drehgelenken sind bei heutigen Koordinatenmeßgeräten bereits weit verbreitet. Damit macht es wenig Sinn zusätzlich eine Dreh-Schwenkeinheit mit drei Drehgelenken vorzusehen, weil dies unnötig Kosten verursacht. Zum einen müßte zusätzlich eine Dreh-Schwenkeinheit mit drei Drehgelenken gefertigt werden. Zum anderen müßte für jedes der drei Drehgelenke wieder, soweit vorhanden, die im US-Patent 4,888,877 und dem korrespondierenden Europäischen Patent 0 317 967 beschriebenen Korrekturwerte aufgenommen werden.

Natürlich kann die Dreh-Schwenkeinheit (13) jedoch auch eine Einheit sein, die drei Drehgelenke (6,7,8) umfaßt, wenn dies gewünscht ist. Außerdem kann die Dreh-Schwenkeihheit natürlich auch eine rastende Dreh-Schwenkeinheit sein, bei der diverse Drehstellungen als Raste ausgebildet sind.

Der optische Sensor (9) soll anhand von Figuren 2 und 3 beschrieben werden. Figur 3 zeigt hierbei eine rein schematische Zeichnung des Sensors (9) in der Seitenansicht. Der Sensor (9) ist in diesem Ausführungsbeispiel als zweidimensional arbeitender optischer Lasertriangulationstaster ausgebildet Dazu weist der Sensor (9) eine Beleuchtungseinheit (14) auf, die einen Laserstrahl linienförmig in einen Lichtfächer (10) auffächert, wie dies aus Figur 2 besonders gut zu sehen ist. Dazu kann die Beleuchtungseinheit (14) einen Laser sowie ein rotierendes Spiegelprisma umfassen, das den Laserstrahl linienförmig in einen Lichtfächer (10) auffächert. Wenn der Lichtfächer (10) dann auf der Oberfläche eines Werkstückes, hier einer Kalibrierkugel (12), auftrifft, und von dieser reflektiert wird, ergibt sich ein linienformiges Muster (11), wie dies insbesondere Figur 2 zeigt. Dieses linienförmige Muster (11) wird nunmehr von einer Videokamera, von der hier nur rein schematisch das Objektiv (15) und der CCD-Chip (16) gezeigt ist, beobachtet und zwar derart, daß die optische Achse (17) der Videokamera mit dem Lichtfacher (10) einen Winkel einschließt. Aus dem aufgenommenen Bild des linienförmigen Musters (11) läßt sich nun für alle Meßpunkte entlang des linienhrmigen Musters (11) der Abstand vom Werkstück, hier der Kalibrierkugel (12), berechnen. Durch das Sehfeld der Videokamera wird mithin der Meßbereich des optischen Sensors begrenzt, der für diesen speziellen messenden Sensor als zweidimensionales Meßfeld (20) ausgebildet ist.

Der optische Sensor (9) ist durch rechenteehnische Mittel nunmehr so in das Koordinatenmeßgerät einzubinden, daß er unabhängig von seiner Position und Orientierung die Bestimmung von Raumpunkten und Formelementen für die zu messenden Merkmale an einem Werkstück liefert.

Dies wird erreicht, indem die Sensorsignale, die im Sensorkoordinatensystem (u,y,w) ermittelt werden, mit Hilfe von mehrparametrigen Gleichungen in das. Maschinenkoordinatensystem $(X_M,Y_M,Z_M)$ des Koordmatenmeßgerätes konvertiert und transformiert werden.

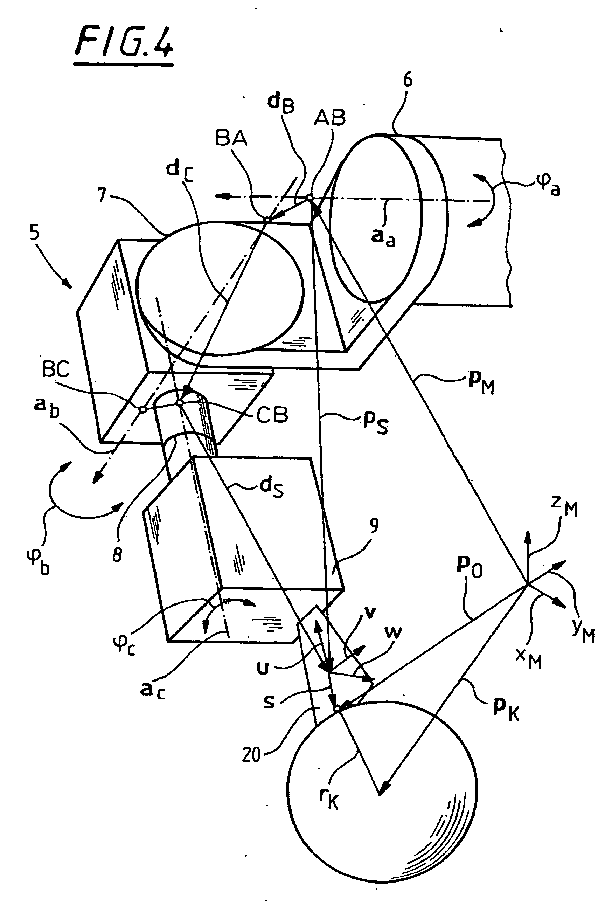

Folgend wird vorausgesetzt, daß die interne Kalibrierung des Sensors hinreichend genan ausgeführt ist und der Sensor (9) für ein zu messendes Werkstück kartesische Sensorkoordinaten (s'={u,v,w}) liefert, wie dies anhand von Figur 4 veranschaulicht wird.

Figur 4 zeigt eine rein schematische Darstellung der Dreü-Schwenkeinheit (13) und des Sensors (9) anhand der das mathematische Vorgehen erläutert wird. Ein derartiger Sensor ist beispielsweise bei der Firma Perceptron erhältlich. Für die äußere Signalverarbeitung sind dann die Position und die räumliche Orientierung des Sensors (9) 9ie ,Grundlage. Außerdem wird ferner vorausgesetzt, daß für die Dreh-Schwenkeinheit mit den zwei Drehachsen ($a_a$ und $a_b$) bereits eine Einbankalibrierung vorgenommen wurde, wie dies im US-Patent 4,888,877 und dem korrespondierenden Europäischen Patent 0 317 967 detailliert beschrieben ist, sö daß also in Abhängigkeit von der Drehstellung der Dreh-Schwenkeinheit die Lage der Punkte (AB und BA) bekannt sind, die jeweils durch den Schnittpunkt der Abstandsgeradea zwischen den Drehachsen ($a_a$ und $a_b$) mit den Drehachsen ($a_a$ und $a_b$) definiert sind. Einen Ortsvektor (po) eines auf der Werkstückoberfläche gemessenen Meßpunktes im Maschinenkoordinaiensystem $(X_M,Y_M,Z_M)$ kann man als Vcktorgleichung wie folgt angebea:

$$\text{Gleichung 1} \qquad p_O = p_M + p_S + M_S\, s'$$

Der Vektor ($P_M$) stellt hierbei den Ortsvektor zum Punkt (AB) im Maschinenkoordinatensystem $(X_M,Y_M,Z_M)$ dar. Der Vektor ($P_S = \{X_S,Y_S,Z_S\}$) stellt den Vektor zwischen dem Punkt (AB) und dein Ursprung des Sensorkoordinatensystems (u,v,w) dar. Der Vektor (s'), einen gemessenen Meßwert auf der Oberfläche des zu vermessenden Werkstückes im Sensorkoordinatensystem (u,v,w). Mit

$$M_S = \begin{pmatrix} m_{11} & m_{12} & m_{13} \\ m_{21} & m_{22} & m_{23} \\ m_{31} & m_{32} & m_{33} \end{pmatrix}$$

wiederum ist eine Sensormatrix bezeichnet, die die Transformation des Sensorkoordinatensystems (u,v,w) in das Maschinenkoordinatenestem $(X_M,Y_M,Z_M)$ definiert. Da der Sensor (9) nur zweidimensional mißt und damit nur zwei Sensorkoordinaten (u,v) aufweist, reduziert sich der Meßbereich auf eine flächiges Meßfeld (20), das im Idealfall eine Ebene ist. Die Sensormatrix ($M_S$) reduziert sich dann wie folgt:

$$M_S = \begin{pmatrix} m_{11} & m_{12} \\ m_{21} & m_{22} \\ m_{31} & m_{32} \end{pmatrix}$$

Damit über die Gleichung 1 aus einem im Sensorkoordinatensystem gemessenen Sensormeßwert ( s' ) der Ortsvektor ($p_O$) des auf der Werkstückoberfläche gemessenen Punktes im Maschinenkoordinatensystem berechnet werden kann, müssen also sowohl die drei Parameter ($x_S,y_S,z_S$) des Vektors ($p_S$) ermittelt werden, wie auch die sechs Parameter ($m_{11}...m_{32}$) der Sensormatrix ($M_S$).

Die Ermittlung dieser neun Parameter wird nunmehr im folgenden beschrieben. Dazu wird die in Figur 2 gezeigte Kalibrierkugel (12) mit genau bekanntem Radius und genau bekanntem Mittelpunkt verwendet Der Mittelpunkt der Kalibrierkugel (12) wird hierbei ermittelt, indem die Kalibrierkugel (12) am Meßtisch (1) des in Figur 1 gezeigten Koordinatenmeßgerät befestigt wird und mit einem tastenden Meßkopf die Kugel an einer Vielzahl von Punkten abgetastet wird. Aus den Punkten kann dann exakt der Mittelpunkt der Kalibrierkugel (12) ermittelt werden, dessen Ortsvektor im Maschinenkoordinatensystem mit ($p_K$) bezeichnet ist.

Zur Kalibrierung des optischen Sensor (9) wird danach die Dreh-Schwenkeinheit (13) mit dem optischen Sensor (9) am Meßarm (4) eingewechselt und die Kalibrierkugel (12) in einer Vielzahl von Stellungen vermessen. Für einen beliebigen Meßpunkt ($p_{O,I}$) (der Index i steht für i=1.. Anzahl der Meßpunkte) des optischen Sensors (9) auf der Oberfläche der Kalibrierkugel (12) im Maschinenkoordinatensystem muß deshalb gelten:

$$\text{Gleichung 2:} \qquad |p_{O,i} - p_K| = r_K$$

wobei ($p_K$) für den Mittelpunkt der Kalibrierkugel (12) steht und ($r_K$) für den Radius der Kalibrierkugel (12). Ersetzt man ($P_{o2I}$) durch den Ausdruck in Gleichung 1, so gelangt man zu folgendem Ausdruck

$$\text{Gleichung 3:} \qquad |p_M + p_S + M_S s'_i - p_K| = r_K$$

Die neun gesuchten Parameter können nun für eine feste Winkelstellung der Drehgelenke (6,7,8) relativ einfach ermittelt werden, indem das Gaußsche Ausgleichsverfabren der minimalen Fehlerquadrate angewandt wird. Der Fehler ($f_i$) für einen gemessenen Meßpunkt ergibt sich hierbei wie folgt:

$$\text{Gleichung 4:} \qquad f_i = |p_{O,i} - p_K| - r_K = |p_M + p_S + M_S s'_i - p_K| - r_K$$

Die Bedingung der minimalen Fehlerquadrate lautet also:

$$\text{Gleichung 5:} \qquad \sum_{i=1}^{n} f_i^2 = \sum_{i=1}^{n} \left( |p_M + p_S + M_S s'_i - p_K| - r_K \right)^2 = \text{Min}$$

Nimmt man nun über die Oberfläche der Kalibrierkugel (12) verteilt eine Vielzahl von Meßpunkten ($s'_i$) auf, so kann man diese Bediugungsgleichung nach den heute üblichen iterativen Verfahren lösen, wie beispielsweise Newton Raphson. Hieraus ergeben sich dann die gesuchten Parameter für die Sensormatrix ($M_S$) und für den Vektor ($p_S$), so daß nunmehr über die Gleichung 1 beliebige Meßpunkte (s') des optischen Meßsensors (9) in das Maschinenkoordinatensystem transformiert werden können.

Die bestimmten Parameter gelten jedoch nur für eine einzige Stellung der Dreh-Schwenkeinheit (13). Sobald jedoch nur eines der Drehgelenke (6,7,8) der Dreh-Schwenkeinheit (13) verstellt wird, muß die oben genannte Kalibrierung für die betreffende Drehstellung erneut durchgeführt werden. Zur Lösung dieses:Problems wurde bereits für eine Dreh-Schwenkeinheit mit zwei aufeinander senkrecht stehenden Drehachsen in der US 4,888,877 und der EP 0 317 967 B1 vorgeschlagen, die Dreh-Schwenkeinheit mit Drehgelenken auszustatten, die reproduzierbar unterschiedliche Drehstellungen einnehmen können und der Dreh-Schwenkeinheit Korrekturwerte zuzuordnen, die die Lage der Drehachsen zueinander unäloder Winkelpositionsabweichungen und/oder Laufabweichungen der Achsen zueinander beschreiben. Nachdem die Korrekturwerte aufgenommen wurden kann dann jedes der Drehgelenke in eine beliebige Stellung gebracht werden, wobei über die Korrekturwerte für jede Drehstellung der Drehgelenke die Meßwerte des Sensors entsprechend in das Maschinenkootdinatensystem transformiert werden.

Das aus den genannten Patenten bekannte Verfahren kann problemlos für eine dritte Drehachse, wie die Drehachse ($a_c$) erweitert werden. Dazu muß lediglich die Lage der dritten Drehachse ($a_c$) ermittelt werden. Die Schnittpunkte der Abstandsgeraden zwischen den Drehachsen ($a_b$ und $a_c$) mit den Drehachsen ($a_b$ und $a_o$) definieren die Punkte (BC) und (CB). Für eine Dreh-Schwenkeinheit (13) mit weitgehend fehlerfreien Drehgelenken, bei denen als einziger Fehler die Lage der Drehachsen zueinander korrigiert wird, ergibt sich der Ortsvektor (Po) eines Meßpunktes auf der Werkstückoberfläche wie folgt:

Gleichung 6: $\quad p_O = p_M + \left\{ T_A^{-1} R_A \left[ T_{AB}^{-1} R_B \left( T_{BC}^{-1} R_C \left( d_s + M_S^{\bullet} s' \right) + d_c \right) \right] + d_B \right\}$

Hierin bedeuten :

$T_A^{-1}$ : die invertierte Transformationsmatrix zur Transformation des Koordinatensystems der Drehachse ($a_a$) in das Maschinenkoordinatensystem

$R_A$: die Rotationsmatrix, die die Rotation des Drehgelenkes (6) um seine Drehachse ($a_a$) beschreibt

$T_{AB}^{-1}$ : die invertierte Transformationsmatrix zur Transformation des Koordinatensystems der Drehachse ($a_b$) in das Koordinatensystem der Drehachse ($a_a$)

$R_B$: die Rotationsmatrix, die die Rotation des Drehgelenkes (7) um seine Drehachse ($a_b$) beschreibt

$T_{BC}^{-1}$ : die invertierte Transformationsmatrix zur Transformation des Koordinatensystems der Drehachse ($a_c$) in das Koordinatensystem der Drehachse ($a_b$)

$R_C$: die Rotationsmatrix die die Rotation des Drehgelenkes (8) um seine Drehachse ($a_c$) beschreibt

$d_B$: den Abstandsvektor vom Punkt (AB) zum Punkt (BA)

$d_C$: den Abstandsvektor vom Punkt (BA) zum Punkt (CB)

$d_S$: den Abstandsvektor vom Punkt (CB) zum Ursprung des Sensorkoordinatensystems (u,v,w)

$M_S^{\bullet}$ : die Sensormatrix in den Koordinaten der Drehachse ($a_c$)

s' : Vektor eines gemessenen Meßpunktes in Sensorkoördinaten {u,v,w}

Im Fall von weitgehend fehlerfreien Drehgelenken ist deren Bewegung eine reine Rotation und es gilt für die Rotationsmatrizen ($R_A$) und ($R_B$) und ($R_C$) für die Drehung um die Z-Achse des jeweiligen Gelenkkoordiaatensystems.

Gleichung 7 $\quad R_A = R_B = R_C = \begin{pmatrix} \cos\varphi & -\sin\varphi & 0 \\ \sin\varphi & \cos\varphi & 0 \\ 0 & 0 & 1 \end{pmatrix}$

In dieser Gleichung 7 bezeichnet ($\varphi$) hierbei den Drehwinkel um das jeweilige Drehgelenk (6,7,8). Für die Rotationsmatrix ($R_A$) ist es der Drehwinkel ($\varphi_A$) des Drehgelenkes (6), für die Rotationsmatrix ($R_B$) ist es der Drehwinkel ($\varphi_B$) des Drehgelenkes (7) und für die Rotationsmatrix ($R_C$) ist es der Drehwinkel ($\varphi_C$) des Drehgelenkes (8).

Alle weiteren Vektoren und Matrizen sind auch im Fall idealer Drehgelenke unbekannt und müssen experimentell bestimmt werden. Dazu kommen als weitere Unbekannte die Nullwitkel der beiden Winkelmeßsysteme. Demgemäß sind für die Kalibrierung der Dreh-Schwenkeinheit Messungen für ausreichend unabhängige Beidingungsgleichungen, durchzuführen: Das ist auch dann noch der Fall, wenn die Korrektur der einzelnen Drehgelenke bekannt ist.

Diese Gleichung 6 entspricht hierbei weitestgehend der Gleichung I des US-Patentes 4,888,877 und dem korrespondierenden Europäischen Patent 0 317 967 wobei diese zusätzlich um die Therme für die dritte Drehachse ($a_c$) erweitert wurde und die Gleichung lediglich etwas anders mathematisch beschrieben ist.

In dieser Gleichung 7 sind in dem hier beschriebenen Ausfuhrungsbeispiel neben den ohnehin bekannten Matrizen ($R_A$, $R_B$, $R_C$) die Matrizen $(T_A^{-1})$ sowie $(T_{AB}^{-1})$, sowie die Vektoren ($p_M$) und ($d_b$) bereits bekannt, da für die Drehgelenke (6 und 7) der Dreh-Schwenkeinheit (13), wie oben bereits auSgeführt, gemäß dem Vorgehen des US-Patentes 4,888,877 und dem korrespondierenden Europäischen Patent 0 317 967 die entsprechenden Korrekturparameter bestimmt wurden.

Mit angebautem dritten Drehgelenk (8) und Sensor (9) müssen mithin nur noch die Parameter der Matrizen $(T_{BC}^{-1}, M_S^{\bullet})$ und der Vektoren ($d_c$) und ($d_s$), sowie der Nullwinkel des Drehgelenkes (8) bestimmt werden, wobei

zwischen der Matrix $(\mathbf{M_S^{\bullet}})$ und der Matrix $(M_S)$ folgender Zusammenhang besteht:

$$\mathbf{M_S = T_A^{-1}R_A * T_{AB}^{-1}R_B * T_{BC}^{-1}R_C * M_S^{\bullet}}$$

Wie diese fehlenden Parameter im einzelnen aufgenommen werden, soll nunmehr erläutert werden, wobei es zwei grundsätzliche Lösungswege gibt. Es sind dies eine Lösung nach der Methode des Fehlerquadrabninimums der Abweichungen an der. Kalibrierkugel Und eine zweistufige Lösung mit Kalibrierung der Sensorparameter, wie vorstehend beschrieben, und anschließender Bestimmung sämtlicher Parameter für das Drehgelenk (8).

Um die restlichen benötigten Korrekturwerte aufzunehmen sollte zunächst die Lage der Drehachse $(a_c)$ des Drehgelenkes (8) bestimmt werden. Wenn die Lage der Drehachse $(a_c)$ erst bekannt ist, kann eine Abstandsgerade zwischen den Drehachsen $(a_b$ und $a_c)$ berechnet werden, wobei die Schnittpunkte dieser Abstandsgeraden mit den Drehachsen $(a_b$ und $a_c)$ die Punkte (BC) und (CB) bestimmt. Hierüber ist aber der Vektor $(d_c)$ definiert, der sich als Abstandsvektor zwischen den Punkten (BA) und (CB) ergibt Wenn der Vektor $(d_c)$ erst bekannt ist, können durch Aufnahme einer Vielzahl von unabhängigen Bestimmungsgleichungen wie üblich mittels einem numerischen Verfahren, wie beispielsweise das Verfahren der kleinsten Fehlerquadrate nach Gauß die restlichen Parameter der Gleichung 6 bestimmt werden.

Die Lage der Drehachse $(a_c)$ könnte hierbei analog bestimmt werden, wie dies im US-Patent 4,888,877 und dem korrespondierenden Europäischen Patent 0 317 967 im Zusammenhang mit der Figur 7 für die beiden Drehachsen der hierin gezeigten-Dreh-Schwenkeinheit beschrieben ist, indem anstelle des Sensors (9) eine von der Drehachse $(a_c)$ beabstandet angeordnete Kugel am Drehgelenk (8) befestigt wird und das Drehgelenk in eine Vielzahl von Drehstellungen gebracht wird, wobei dann für jede der Drehstellungen der jeweilige. Mittelpunkt der Kugel gemessen wird und aus den gemessenen Kugelmittelpunkten ein Ausgleichskreis besteingepaßt wird. Die Drehachse ergibt sich dann als eine Gerade senkrecht durch den Mittelpunkt des Ansgleichskreises. Dies hat mehrere Nachteile. Zum einen muß extra zur Aufnahme dieser Korrekturwerte anstelle des Sensors (9) eine entsprechende Kugel am Drehgelenk (8) befestigt werden. Des weiteren muß die gesamte Dreh-Schwenkeinheit (13) auf einem gesonderten Meßgerät aufgespannt werden, auf dem dann die einzelnen Mittelpunkte der Kugel für die einzelnen Drehstellungen bestimmt wird.

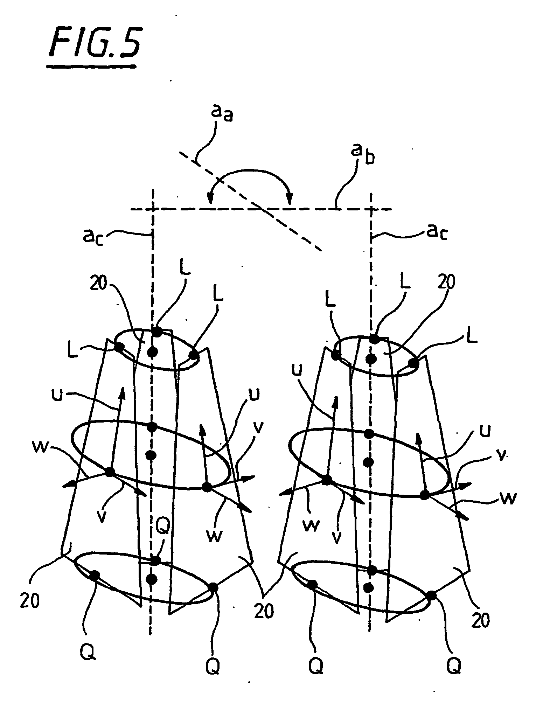

Eine erhebliche Vereinfachung ergibt sich deshalb, wenn die Lage der Drehachse $(a_c)$ erfindungsgemäß mit dein messenden Sensor (9) selbst bestimmt wird. Wie dies im einzelnen durchgeführt wird, wird nachfolgend im Zusammenhang mit Figur 4 und 5 erläutert werden.

Nach dem ersten Kaübrierverfahren sind für wenigstens zwei Drehstellungen j =1 .. m (m≥2) der Achse $(a_c)$ des Drehgelenkes (8) an hinreichend vielen Pösitiönen (i= 1, .. n) des Sensormeßbereiches Meßpunkte (po) an der Kugel aufzunehmen. Alle diese Punkte müssen der Crruadgleichung genügen

$$\left|\mathbf{p}_{OJ,I} - \mathbf{p}_K\right| = r_K$$

Die gesuchten Parameter $(T_{BC}, d_S, M_S^*, d_C)$ für die Achse $(a_C)$ einschließlich des Sensors ergeben sich dann aus der folgenden, in diesem Falle sehr umfangreichen, Gleichung für das Fehlerquadratminimum, die in bekannter Weise, beispielsweise. mittels Newtan-Raphson, zu lösen ist.

$$\sum_J \sum_I f_{J,I} = \sum_J \sum_I \left(\left|\mathbf{p}_M - \mathbf{p}_K + \mathbf{T}_A^{-1}\mathbf{R}_A\left\{\mathbf{T}_{AB}^{-1}\mathbf{R}_B\left[\mathbf{T}_{BC}^{-1}\mathbf{R}_{C,J}\left(\mathbf{d}_S + \mathbf{M}_S^{\bullet} \mathbf{s'}_{J,I}\right) + \mathbf{d}_C\right] + \mathbf{d}_B\right\}\right| - r_K\right)^2 \Rightarrow Min$$

Mathematisch und numerisch einfacher ist das zweite Lösungsverfahren, bei dem im ersten Schritt für wenigstens zwei, zweckmäßig jedoch drei oder mehr Drehstellungen des Drehgelenkes (8) bzw. der Drehachse $(a_C)$, die sich vorzugsweise gleichmäßig über den gesamten Drehbereich des Drehgelenkes (8) verteilen, eine Kalibrierung des Sensors (9), wie dies entweder oben beschrieben ist oder wie dies auch in der DE 196 18 283 A1 beschrieben ist, durchgeführt werden, bei der für jede der Drehstellungen die Parameter der Sehsonnatrix $(M_S)$ berechnet werden, die die Transformation des Sensorkoordinatensystems in das Maschinenkoordinatensystem beschreibt und Parameter des Vektors ($p_S$) berechnet werden, der die Ablage des Ursprunges des Sensorkoordinatensystems (u,v,w) gegenüber dem Punkt (AB) im Maschinenkoordinatensystem beschreibt Aus den ermittelten Vektoren ($p_S$) könnte bereits nach dem Modell des US-Patentes 4,888,877 und des korrespondierenden Europäischen Patentes 0 317 967 ein Ausgleichskreis ermittelt werden und hieraus die Lage der Drehachse ($a_c$). Dies würde jedoch im Falle, dass der Sensornullpunkt sehr nahe an der Drehachse $a_c$ liegt und angesichts der unvermeidlichen Meßungenauigkeit des Sensors (9) zu erheblichen Unsicherheiten führen. Besonders vorteilhaft wird man bei der Berechnung der Lage der Achse ($a_c$) zusätzlich auch die Sensormatrix ($M_S$) einbeziehen, da diese die Ausrichtung des Sensorkoordinatensystems definiert. Man könnte beispielsweise für zwei virtuelle Meßpunkte (L, Q) im Sensorkoordinatensystem (u,v,w) am Rande des Meßfeldes (20) für jede der drei Drehstellungen analog einen Ausgleichskreis berechnen und durch die entsprechenden Mittelpunkte der drei Ausgleichskreise eine besteingepaßte Gerade legen, die dann die Drehachse ($a_c$) definiert.

Noch wesentlich genauer ergibt sich die gesuchte Achsrichtung aus den vorher, bestimmten Sensormatrizen selbst, indem für zwei beliebige Winkelkombmationeh aus den beteiligten Sensormatrizen ($M_{Si}$ und $M_{Sj}$) die zugehörige Roationsmatrix ($R_{ij} = M_{Si} M_{Sj}^{-1}$) gebildet und der Achsvektor als Eigenvektor der Matrix ($R_{ij}$) berechnet wird. Im Falle von (m>2). Drehstellungen der Achse ($a_C$) ergeben sich aus den (m(m-1)/2) möglichen Zweierkombinationem von Sensormacizen die zugehörigen Roationsmatrizen ($R_{ij}$), aus denen der gesuchte Achsrichfimgsvektor als mittlerer Eigenvektor nach einem bekannten Quadratmittel-Verfahren (z.B. Householder) berechnet werden kann.

Besonders vorteilhaft werden zur Aufnahme der Korrekturwerte die Drehgelenke (6 und 7) nach Möglichkeit in eine Stellung- gebracht, so daß sich das Drehgelenk (8) möglichst wenig durchbiegt. Dies ist in diesem speziellen Ausfuhrungsbeispiel dann der Fall, wenn die Drehachse ($a_b$) horizontal ausgerichtet ist und die Drehachse ($a_c$) vertikal, wie dies Figur 5 zeigt. Besonders vorteilhaft ist es zusätzlich, wenn das Drehgelenk (6) mit der horizontal ausgerichteten Drehachse ($a_a$) zusätzlich in eine um 180° gedrehte Stellung gebracht wird und in dieser Stellung erneut Kalibrierungen wie eben beschrieben in den mindestens zwei Drehstellungen des Drehgelenkes (8) vorgenommen werden.

Obwohl dies vollkommen klar ist, sei der Vollständigkeit halber angemerkt, daß die besagten drei Drehstellungen bei einem Drehbereich des Drehgelenkes (8) von 360° jeweils um 120° versetzt sind.

Nachdem nunmehr die Lage der Drehachse ($a_c$) berechnet ist, lassen sich hierdurch die Punkte (BC und CB) und somit auch die Vektoren ($d_c$ und $d_s$) berechnen. Außerdem ist aus der Kalibrierung die Sensormatrix ($M_S$ bzw. $M_S^*$) bekannt. Außerdem können über ein numerisches Berechnungsverfahren, wie z.B. das Verfahren der kleinsten Fehlerquadrate nach Gauß, mittels der bei der Kalibrierung aufgenommenen Meßwerte die Parameter der Transformationsnmatrix $(\mathbf{T_{BC}^{-1}})$ berechnet werden.

Somit stehen nun sämtliche unbekannten Parameter zur Verfügung mit denen die Lage der Drehachsen korrigiert werden kann.

Neben der Korrektur der Lage der Drehachsen kann es auch zusätzlich Sinn machen Winkelposnionsabweichungen und/oder Laufabweichungen in den Drehachsen zu korrigieren. Die Korrektur kann hierbei ganz genauso erfolgen, wie die im US-Patent 4,888,877 und dem korrespondierenden Europäischen Patent 0317 967 im Zusammenhang mit der hierin enthaltenen Figur 8 beschrieben ist, indem anstelle des Sensors (9) eine Plätte mit vier Kugeln am Drehgelenk (8) befestigt wird und die Platte über das Drehgelenk (8) in eine Vielzahl von Drehstellungen verdreht wird, wobei für jede der Kugeln der Mittelpunkt gemessen wird und über die Mittelpunkte gemäß dem aus der Deutschen Offenlegungsschrift DE-A-36 37 410 bekannten "Verfahren zur Messung von Drehtischabweichungen" Korrekturparameter für Winkelpositionsabweichungen und/oder Laufabweichungen in den Drehgelenken bestimmt werden.

Anstelle dieser Kugelplatte könnte jedoch wiederum genauso der Sensor (9) verwendet werden, wobei das Drehgelenk (8) in eine Vielzahl von Drehstellungen verdreht wird und für jede der Drehstellungen eine Kalibrierung in oben genannter Weise durchgeführt wird. Da die Sensormatrix ($M_S$), wie bereits oben geschildert, die Ausrichtung des Sensorkoordinatensystems (u,v,w) definiert, könnten dann anstelle der vier Mittelpunkte der Kugeln auf der Platte vier virtuelle Punkte verwendet werden, die sich beispielsweise in den Ecken des Meßfeldes (20) befinden, so daß vollkommen analog über das aus der DE-A-35 37 410 gezeigte Verfahren die Korrekturwerte berechnet werden können.

Natürlich muß der Sensor (9) bei diesem letztgenannten Verfahren wenigstens in zwei Dimensionen messen.

Die oben bezeichneten Verfahren werden üblicherweise in der Steuer- und Auswerteeinheit (23) durchgeführt. Natürlich könnte alternativ auch beispielsweise ein separater Mikroprozessor vorgesehen werden, in dem die Berechnungen vorgenommen werden.

**Patentansprüche**

1. Verfahren zur Ermittlung von Korrekturparametern einer Dreh-Schwenkeinheit (13), an der ein in wenigstens einer Dimension messender Sensor (9) befestigt ist, **gekennzeichnet durch** folgende Verfahrensschritte:

- es wird für wenigstens drei Drehstellungen eines Drehgelenkes der Dreh-Schwenkeinheit eine Kalibrierung des Sensors durchgeführt, bei der pro Drehstellung wenigstens Parameter eines ersten Parameterfeldes ($M_S$) berechnet werden, das die Transformation eines Sensorkoordinatensystems (u,v,w) in das Maschinenkoordinatensystem ($X_M$, $Y_M$, $Z_M$) beschreibt und Parameter eines weiteren Parameterfeldes ($P_S$) berechnet werden, das die Ablage des Ursprungs des Sensorkoordinatensystems (u,v,w) gegenüber einem Punkt (AB) im Maschinenkoordinatensystem ($X_M$, $Y_M$, $Z_M$) beschreibt

- aus den ermittelten Parametern der Parameterfelder werden Korrekturparameter des Drehgelenkes ermittelt wobei

die Korrekturparameter die Lage der Drehachsen zueinander und/oder Winkelpositionsabweichungen und/oder Laufabweichungen umfassen.

2. Verfahren nach Anspruch 1, **dadurch gekennzeichnet, daß** die Drehachse ($a_c$) des Drehgelenkes (8) bei der Kalibrierung des Sensors vertikal ausgerichtet ist.

3. Verfahren nach Anspruch 1, **dadurch gekennzeichnet, daß** bei der Kalibrierung Meßwerte gemessen werden, die sich weitgehend gleichmäßig über den Meßbereich des Sensors verteilen.

4. Verfahren nach einem der Ansprüche 1 bis 2, **dadurch gekennzeichnet, daß** die Korrekturparameter nur für das Drehgelenk (8) ermittelt werden, an dem der Sensor unmittelbar befestigt ist.

5. Verfahren nach einem der Ansprüche 1 bis 4, **gekennzeichnet dadurch, daß** zur Kalibrierung des Sensors folgende Verfahrensschritte durchgeführt werden:

- Bereitstellen einer Kalibrierkugel (12) mit bekanntem Radius ($r_K$) im Meßraum des Koordinatenmeßgerätes und bestimmen des Mittelpunktes ($p_K$) der Kalibrierkugel (12) im Maschinenkoordinatensystem ($X_M$,$Y_M$,$Z_M$)
- messen von Punkten ($p_{O,I}$) auf der Oberfläche der Kalibrierkugel (12) mit dem zu kalibrierenden Sensor (9), wobei in wenigstens einer vom Sensor meßbaren Dimension (u,v) Meßwerte ($s'_I$) über weite Bereiche des Meßbereiches aufgenommen werden
- ermitteln von Parametern des ersten Parameterfeldes ($M_S$) das die Transformation des Sensorkoordinatensystems (u,v,w) in das Maschinenkoordinatensystem ($X_M$,$Y_M$,$Z_M$) beschreibt und des zweiten Parameterfeldes (ps), das die Ablage des Ursprungs des Sensorkoordinatensystems (u,v,w) gegenüber einem Punkt (AB) im Maschinenkoordinatensystem ($X_M$,$Y_M$,$Z_M$) beschreibt, für den Sensor aus den Meßwerten ($s'_I$) unter der Berücksichtigung daß der Mittelpunkt ($p_K$) und der Radius ($r_K$) der Kalibrierkugel (12) als bekannt vorausgesetzt wird.

6. Verfahren nach Anspruch 5, **dadurch gekennzeichnet, daß** die Parameter der Parameterfelder ($M_S$, $p_S$) unter Ausnutzung folgender Beziehung bestimmt werden,

$$| \, p_{O,I} - p_K \, | = r_K$$

wobei hierin bedeuten:

$p_{O,I}$ :ein Meßpunkt auf der Oberfläche der Kalibrierkugel
$p_K$ :der Mittelpunkt der Kalibrierkugel
$r_K$ :der Radius der Kalibrierkugel
und wobei in der Beziehung der Mittelpunkt ($p_K$) der Kalibrierkugel und der Radius der Kalibrierkugel als bekannt vorausgesetzt werden.

7. Verfahren nach Anspruch 6, wobei die Parameter der Parameterfelder ($M_S$, $p_S$) unter nachfolgender Beziehung bestimmt werden:

$$| \, p_M + p_S + M_S \, s' - p_K \, | = r_K$$

wobei hierin bedeuten:

$p_K$ : Vektor zum Mittelpunkt der Kalibrierkugel im Maschinenkoordinatensystem

$r_K$ : der Radius der Kalibrierkugel

$p_M$ : Vektor vom Ursprung des Maschinenkoordinatensystems $(X_M,Y_M,Z_M)$ zu einem Punkt (AB) im Meßarm des Koordinatenmeßgerätes an dem der Sensor (9) befestigt ist

$p_S$: Vektor vom Punkt (AB) im Meßarm des Koordinatenmeßgerätes zum Ursprung des Sensorkoordinatensystems (u,v,w)

*s'* : Vektor eines im Sensorkoordinatensystem (u,v,w) gemessenen Meßpunktes auf der Oberfläche der Kalibrierkugel

$M_S$: Parameterfeld (Sensormatrix), das die Transformation des Sensorkoordinatensystems (u,v,w) in das Maschinenkoordinatensystem $(X_M,Y_M,Z_M)$ angibt.

8. Dreh-Schwenkeinheit (13) für Sensoren (9) von Koordinatenmeßgeräten, mit wenigstens zwei Drehgelenken (6,7,8) zur winkelmäßigen Ausrichtung des Sensor, und mit einer zugeordneten Korrektureinheit, die bei der Messung die Meßwerte des Sensors (9) entsprechend der Drehstellung der Drehgelenke (6,7,8) korrigiert, **gekennzeichnet dadurch, dass** die Dreh-Schwenkeinheit (13) eingerichtet ist, nachfolgendes Verfahren zur Aufnahme der Korrekturwerte durchzuführen:

    - durchführen einer Kalibrierung eines in wenigstens einer Dimension messenden Sensors (9) für wenigstens drei Drehstellungen eines Drehgelenkes (8), bei der pro Drehstellung wenigstens Parameter eines ersten Parameterfeldes $(M_S)$ berechnet werden, das die Transformation eines Sensorkoordinatensystems (u,v,w) in das Maschinenkoordinatensystem $(X_M,Y_M,Z_M)$ beschreibt und Parameter eines weiteren Parameterfeldes $(P_S)$ berechnet werden, das die Ablage des Ursprungs des Sensorkoordinatensystem (u,v,w) gegenüber einem Punkt (AB) im Maschinenkoordinatensystem $(X_M,Y_M,Z_M)$ beschreibt
    - aus den ermittelten Parametern der Parameterfelder werden Korrekturparameter des Drehgelenkes (8) ermittelt, wobei

    die Korrekturparameter die Lage der Drehachsen zueinander und/oder Winkelpositionsabweichungen und/oder Laufabweichungen umfassen.

9. Dreh-Schwenkeinheit nach Anspruch 8, **dadurch gekennzeichnet, daß** die Drehachse $(a_c)$ des Drehgelenkes (8) bei der Kalibrierung des Sensors (9) vertikal ausgerichtet ist.

10. Dreh-Schwenkeinheit nach Anspruch 8, **dadurch gekennzeichnet, daß** bei der Kalibrierung Meßwerte gemessen werden, die sich weitgehend gleichmäßig über den Meßbereich des Sensors verteilen.

11. Dreh-Schwenkeinheit nach einem der Ansprüche 8 bis 10, **dadurch gekennzeichnet, daß** der Sensor ein zweidimensional messender optischer Taster ist

12. Dreh-Schwenkeinheit nach einem der Ansprüche 8 bis 11, **dadurch gekennzeichnet, daß** die Aufnahme der Korrekturparameter für unterschiedliche Winkelstellungen der anderen Drehgelenke (6,7) durchgeführt werden.

13. Dreh-Schwenkeinheit nach einem der Anspruch 8 bis 12, **dadurch gekennzeichnet, daß** die wenigstens drei Drehstellungen des Drehgelenkes sich weitgehend gleichmäßig über den Drehbereich des Drehgelenkes (8) verteilen.

14. Dreh-Schwenkeinheit gemäß einem der Ansprüche 8 bis 12, **dadurch gekennzeichnet, daß** in der Korrektureinheit zur Durchführung der Kalibrierung des Sensors (9) nachfolgendes Verfahren verwendet wird:

    - Bestimmen des Mittelpunktes einer Kalibrierkugel (12) im Maschinenkoordinaiensystem deren Radius bekannt ist
    - messen von Punkten auf der Oberfläche der Kalibrierkugel (12) mit dem zu kalibrierenden Sensor (9), wobei in wenigstens einer vom Sensor meßbaren Dimension (u,v) Meßwerte $(s'_i)$ über weite Teile des Meßbereiches aufgenommen werden
    - ermitteln von Parametern des ersten Parameterfeldes $(M_S)$ aus den Meßwerten $(s'_I)$, das die Transformation des Sensorkoordinatensystems (u,v,w) in das Maschinenkoordinatensystem $(X_M,Y_M,Z_M)$ angibt und des zweiten Parameterfeldes $(p_S)$ aus den Meßwerten $(s'_i)$, das die Ablage des Ursprungs des Sensorkoordinatensystems (u,v,w) gegenüber einem Punkt (AB) im Maschinenkoordinatensystem $(X_M,Y_M,Z_M)$ angibt, wobei der Mittelpunkt $(p_K)$ und der Radius $(r_K)$ der Kalibrierkugel als bekannt vorausgesetzt werden.

**15.** Dreh-Schwenkeinheit nach Anspruch 14, **dadurch gekennzeichnet, daß** die Korrektureinheit die Parameter des Parameterfeldes ($M_S$) unter Ausnutzung folgender Beziehung bestimmt:

$$|p_{o,i} - p_K| = r_K$$

wobei hierin bedeuten:

$p_{o,i}$ :ein Meßpunkt auf der Oberfläche der Kalihrierkugel

$p_K$ :der Mittelpunkt der Kalibrierkugel

$r_K$ :der Radius der Kalibrierkugel

und wobei in der Beziehung der Mittelpunkt ($p_K$) der Kalibrierkugel und der Radius der Kalibrierkugel als bekannt vorausgesetzt werden.

**16.** Dreh-Schwenkeinheit nach Anspruch 15, **dadurch gekennzeichnet, daß** die Korrektureinheit die Parameter des Parameterfeldes ($M_S$) unter nachfolgender Beziehung bestimmt:

$$|p_M + p_S + M_S s' - p_K| = r_K$$

wobei hierin bedeuten:

$p_K$:Vektor zum Mittelpunkt der Kalibrierkugel im Maschinenkoordinatensystem

$r_K$ :der Radius der Kalibrierkugel

$p_M$ : Vektor vom Ursprung des Maschinenkoordinatensystems zu einem Punkt (AB) im Meßarm des Koordinatenmeßgerätes an dem der Sensor (9) befestigt ist

$p_S$: Vektor vom Punkt (AB) im Meßarm des Koordinatenmeßgerätes zum Ursprung des Sensorkoordinatensystems (u,v,w)

$s'$ : Vektor eines im Sensorkoordinatensystem (u,v,w) gemessenen Meßpunktes auf der Oberfläche der Kalibrierkugel

$M_S$: Parameterfeld (Sensormatrix), das die Transformation des Sensorkoordinatensystems (u,v,w) in das Maschinenkoordinatensystem ($X_M$,$Y_M$,$Z_M$) angibt

**17.** Dreh-Schwenkeinheit nach einem der Ansprüche 8 bis 12 oder 14 bis 16 **dadurch gekennzeichnet, daß** der Sensor (9) auswechselbar an der Dreh-Schwenkeinheit (13) befestigt ist.

**Claims**

**1.** Method for determining correction parameters of a rotating swivel unit (13) on which there is fastened a sensor (9) measuring in at least one dimension, **characterized by** the following method steps:

- for at least three rotational positions of a rotary joint of the rotating swivel unit a calibration of the sensor is carried out in which there are calculated per rotational position at least parameters of a first parameter field ($M_S$) which describes the transformation of a sensor coordinate system (u, v, w) into the machine coordinate system ($X_M$, $Y_M$, $Z_M$), and parameters of a further parameter field ($P_S$) are calculated which describes the shift of the origin of the sensor coordinate system (u, v, w) from a point (AB) in the machine coordinate system ($X_M$, $Y_M$, $Z_M$), and

- correction parameters of the rotary joint are determined from the determined parameters of the parameter fields,

the correction parameters including the position of the axes of rotation relative to one another and/or angular position deviations and/or movement deviations.

**2.** Method according to Claim 1, **characterized in that** the axis of rotation ($a_c$) of the rotary joint (8) is vertically aligned during the calibration of the sensor.

**3.** Method according to Claim 1, **characterized in that** measured values are measured during the calibration which

**12**

are distributed in a largely uniform fashion over the measuring range of the sensor.

4. Method according to one of Claims 1 to 2, **characterized in that** the correction parameters are determined only for the rotary joint (8) on which the sensor is directly fastened.

5. Method according to one of Claims 1 to 4, **characterized in that** the following method steps were carried out to calibrate the sensor:

- providing a calibration sphere (12) of known radius ($r_K$) in the measuring space of the coordinate measuring machine, and determining the centre ($p_K$) of the calibration sphere (12) in the machine coordinate system ($X_M$, $Y_M$, $Z_M$),
- measuring points ($p_{o, i}$) on the surface of the calibration sphere (12) with the aid of the sensor (9) to be calibrated, measured values ($s'_i$) over wide bands of the measuring range being acquired in at least one dimension (u, v) measurable by the sensor, and
- determining parameters of the first parameter field ($M_S$) which describes the transformation of the sensor coordinate system (u, v, w) into the machine coordinate system ($X_M$, $Y_M$, $Z_M$), and of the second parameter field ($p_s$) which describes the shift of the origin of the sensor coordinate system (u, v, w) from a point (AB) in the machine coordinate system ($X_M$, $Y_M$, $Z_M$), for the sensor from the measured values ($s'_i$) by considering that the centre ($p_K$) and the radius ($r_K$) of the calibration sphere (12) are assumed to be known.

6. Method according to Claim 5, **characterized in that** the parameters of the parameter fields ($M_S$, $p_s$) are determined by using the following relationship:

$$|p_{o, I} - p_K| = r_K$$

in which:

$p_o$, i signifies a measuring point on the surface of the calibration sphere,
$p_K$ signifies the centre of the calibration sphere,
$r_K$ signifies the radius of the calibration sphere,
and the centre ($p_K$) of the calibration sphere and the radius of the calibration sphere being assumed to be known in the relationship.

7. Method according to Claim 6, in which the parameters of the parameter fields ($M_S$, $p_s$) are determined using the following relationship:

$$|p_M + p_S + M_S s' - p_K| = r_K$$

in which:

$p_K$ signifies a vector from the centre of the calibration sphere in the machine coordinate system,
$r_K$ signifies the radius of the calibration sphere,
$p_M$ signifies a vector from the origin of the machine coordinate system ($X_M$, $Y_M$, $Z_M$) to a point (AB) in the measuring arm of the coordinate measuring machine on which the sensor (9) is fastened,
$p_s$ signifies a vector from the point (AB) in the measuring arm of the coordinate measuring machine to the origin of the sensor coordinate system (u, v, w),
s' signifies a vector of a measuring point from the surface of the calibration sphere measured in the sensor coordinate system (u, v, w), and
$M_S$ signifies a parameter field (sensor matrix) which specifies the transformation of the sensor coordinate system (u, v, w) into the machine coordinate system ($X_M$, $Y_M$, $Z_M$).

8. Rotating swivel unit (13) for sensors (9) of coordinate measuring machines, having at least two rotary joints (6, 7, 8) for the angular alignment of the sensor, and having an assigned correction unit which during measurement corrects the measured values of the sensor (9) in accordance with the rotational position of the rotary joints (6, 7, 8), **characterized in that** the rotational swivel unit (13) is set up to carry out the following method for acquiring the correction values:

- carrying out calibration of a sensor (9), measuring in at least one dimension, for at least three rotational positions of a rotary joint (8) in which there are calculated per rotational position at least parameters of a first parameter field ($M_S$) which describes the transformation of a sensor coordinate system (u, v, w) into the machine coordinate system ($X_M$, $Y_M$, $Z_M$), and parameters of a further parameter field ($P_S$) are calculated which describes the shift of the origin of the sensor coordinate system (u, v, w) from a point (AB) in the machine coordinate system ($X_M$, $Y_M$, $Z_M$), and
- correction parameters of the rotary joint are determined from the determined parameters of the parameter fields,

the correction parameters including the position of the axes of rotation relative to one another and/or angular position deviations and/or movement deviations.

9. Rotating swivel unit according to Claim 8, **characterized in that** the axis of rotation ($a_c$) of the rotary joint (8) is vertically aligned during the calibration of the sensor (9).

10. Rotating swivel unit according to Claim 8, **characterized in that** measured values are measured during the calibration which are distributed in a largely uniform fashion over the measuring range of the sensor.

11. Rotating swivel unit according to one of Claims 8 to 10, **characterized in that** the sensor is a two-dimensionally measuring optical sensor.

12. Rotating swivel unit according to one of Claims 8 to 11, **characterized in that** the acquisition of the correction parameters is carried out for different angular positions of the other rotary joints (6, 7).

13. Rotating swivel unit according to one of Claims 8 to 12, **characterized in that** the at least three rotational positions of the rotary joint are distributed largely uniformly over the measuring range of the rotary joint (8).

14. Rotating swivel unit according to one of Claims 8 to 12, **characterized in that** the following method is used in the correction unit for carrying out the calibration of the sensor (9):

- determining the centre of a calibration sphere (12) in the machine coordinate system whose radius is known,
- measuring points on the surface of the calibration sphere (12) with the aid of the sensor (9) to be calibrated, measured values ($s'_i$) over wide parts of the measuring range being acquired in at least one dimension (u, v) measurable by the sensor, and
- determining parameters of the first parameter field ($M_S$) from the measured values ($s'_i$) which specifies the transformation of the sensor coordinate system (u, v, w) into the machine coordinate system ($X_M$, $Y_M$, $Z_M$), and of the second parameter field ($p_s$) from the measured values ($s'_i$) which specifies the shift of the origin of the sensor coordinate system (u, v, w) from a point (AB) in the machine coordinate system ($X_M$, $Y_M$, $Z_M$), the centre ($p_K$) and the radius ($r_K$) of the calibration sphere being assumed to be known.

15. Rotating swivel unit according to Claim 14, **characterized in that** the correction unit determines the parameters of the parameter field ($M_S$) by using the following relationship:

$$|p_{o,\,i} - p_K| = r_K$$

in which:

$p_o$, i signifies a measuring point on the surface of the calibration sphere,
$p_K$ signifies the centre of the calibration sphere,
$r_K$ signifies the radius of the calibration sphere,
and the centre ($p_K$) of the calibration sphere and the radius of the calibration sphere being assumed to be known in the relationship.

16. Rotating swivel unit according to Claim 15, **characterized in that** the correction unit determines the parameters of the parameter field ($M_S$) by using the following relationship:

$$\left| p_M + p_S + M_S s' - p_K \right| = r_K$$

in which:

$p_K$ signifies a vector from the centre of the calibration sphere in the machine coordinate system,
$r_K$ signifies the radius of the calibration sphere,
$p_M$ signifies a vector from the origin of the machine coordinate system to a point (AB) in the measuring arm of the coordinate measuring machine on which the sensor (9) is fastened,
$p_S$ signifies a vector from the point (AB) in the measuring arm of the coordinate measuring machine to the origin of the sensor coordinate system (u, v, w),
s' signifies a vector of a measuring point from the surface of the calibration sphere measured in the sensor coordinate system (u, v, w), and
$M_S$ signifies a parameter field (sensor matrix) which specifies the transformation of the sensor coordinate system (u, v, w) into the machine coordinate system ($X_M$, $Y_M$, $Z_M$).

**17.** Rotating swivel unit according to one of Claims 8 to 12 or 14 to 16, **characterized in that** the sensor (9) is fastened exchangeably on the rotating swivel unit (13).


**Revendications**

**1.** Procédé pour déterminer des paramètres de correction d'une unité articulée rotative (13) sur laquelle est fixé un capteur (9) effectuant des mesures dans au moins une dimension,
**caractérisé par** les étapes de procédé suivantes :

- on effectue, pour au moins trois positions de rotation d'une articulation tournante de l'unité articulée rotative, un étalonnage du capteur selon lequel on calcule, pour chaque position de rotation, au moins des paramètres d'un premier champ de paramètres ($M_S$) qui décrit la transformation d'un système (u, v, w) de coordonnées du capteur dans le système ($X_M$, $Y_M$, $Z_M$) de coordonnées machine, et on calcule des paramètres d'un autre champ de paramètres ($p_S$) qui décrit le décalage de l'origine du système (u, v, w) de coordonnées du capteur par rapport à un point (AB) dans le système ($X_M$, $Y_M$, $Z_M$) de coordonnées machine,
- à partir des paramètres déterminés des champs de paramètres, on détermine des paramètres de correction de l'articulation tournante, sachant que les paramètres de correction comprennent la position relative des axes de rotation.et/ou des écarts de position angulaire et/ou des écarts de course.

**2.** Procédé selon la revendication 1, **caractérisé en ce que** l'axe de rotation ($a_c$) de l'articulation tournante (8) est aligné à la verticale lors de l'étalonnage du capteur.

**3.** Procédé selon la revendication 1, **caractérisé en ce qu'**on mesure lors de l'étalonnage des valeurs de mesure qui se répartissent sensiblement uniformément sur la plage de mesure du capteur.

**4.** Procédé selon l'une quelconque des revendications 1 à 2, **caractérisé en ce qu'**on détermine uniquement les paramètres de correction pour l'articulation tournante (8) sur laquelle est directement fixé le capteur.

**5.** Procédé selon l'une quelconque des revendications 1 à 4, **caractérisé en ce qu'**on exécute pour l'étalonnage du capteur les étapes de procédé suivantes :

- fourniture d'une sphère d'étalonnage (12) de rayon connu ($r_K$) dans l'espace de mesure de l'appareil de mesure de coordonnées, et détermination du centre ($p_K$) de la sphère d'étalonnage (12) dans le système ($X_M$, $Y_M$, $Z_M$) de coordonnées machine,
- mesure de points ($p_{o,i}$) sur la surface de la sphère d'étalonnage (12) avec le capteur (9) à étalonner, sachant que des valeurs de mesure ($s'_i$) sont enregistrées sur de larges secteurs de la plage de mesure dans au moins une dimension (u, v) pouvant être mesurée par le capteur,
- détermination pour le capteur, à partir des valeurs ($s'_i$) de mesure et en tenant compte du fait que le centre

($p_K$) et le rayon ($r_K$) de la sphère d'étalonnage (12) sont supposés connus, de paramètres du premier champ de paramètres ($M_S$) qui décrit la transformation du système (u, v, w) de coordonnées du capteur dans le système ($X_M$, $Y_M$, $Z_M$) de coordonnées machine et du deuxième champ de paramètres ($p_S$) qui décrit le décalage de l'origine du système (u, v, w) de coordonnées du capteur par rapport à un point (AB) dans le système ($X_M$, $Y_M$, $Z_M$) de coordonnées machine.

6. Procédé selon la revendication 5, **caractérisé en ce qu'**on détermine les paramètres des champs de paramètres ($M_S$, $p_S$) en utilisant la relation suivante :

$$\left| p_{o,i} - p_K \right| = r_K$$

où :

$p_{o,i}$ est un point de mesure sur la surface de la sphère d'étalonnage
$p_K$ est le centre de la sphère d'étalonnage
$r_K$ est le rayon de la sphère d'étalonnage

et sachant que, dans la relation, le centre ($p_K$) de la sphère d'étalonnage et le rayon de la sphère d'étalonnage sont supposés connus.

7. Procédé selon la revendication 6, sachant qu'on détermine les paramètres des champs de paramètres ($M_S$, $p_S$) d'après la relation suivante :

$$\left| p_M + p_S + M_S\, s' - p_K \right| = r_K$$

où :

$p_K$ : vecteur au centre de la sphère d'étalonnage dans le système de coordonnées machine
$r_K$ : rayon de la sphère d'étalonnage
$p_M$ : vecteur de l'origine du système ($X_M$, $Y_M$, $Z_M$) de coordonnées machine à un point (AB) dans le bras de mesure de l'appareil de mesure de coordonnées sur lequel est fixé le capteur (9)
$p_S$ : vecteur du point (AB) dans le bras de mesure de l'appareil de mesure de coordonnées à l'origine du système (u, v, w) de coordonnées du capteur
s' : vecteur d'un point de mesure, mesuré dans le système (u, v, w) de coordonnées du capteur, sur la surface de la sphère d'étalonnage
$M_S$ : champ de paramètres (matrice du capteur) qui indique la transformation du système (u, v, w) de coordonnées du capteur dans le système ($X_M$, $Y_M$, $Z_M$) de coordonnées machine.

8. Unité articulée rotative (13) pour des capteurs (9) d'appareils de mesure de coordonnées, avec au moins deux articulations tournantes (6, 7, 8) pour l'alignement angulaire du capteur et avec une unité de correction associée qui, lors de la mesure, corrige les valeurs de mesure du capteur (9) en fonction de la position de rotation des articulations tournantes (6, 7, 8), **caractérisée en ce que** l'unité articulée rotative (13) est conçue pour exécuter le procédé suivant afin d'enregistrer les valeurs de correction :

- exécution, pour au moins trois positions de rotation d'une articulation tournante (8), d'un étalonnage d'un capteur (9) effectuant des mesures dans au moins une dimension, étalonnage selon lequel on calcule, pour chaque position de rotation, au moins des paramètres d'un premier champ de paramètres ($M_S$) qui décrit la transformation d'un système (u, v, w) de coordonnées du capteur dans le système ($X_M$, $Y_M$, $Z_M$) de coordonnées machine, et on calcule des paramètres d'un autre champ de paramètres ($p_S$) qui décrit le décalage de l'origine du système (u, v, w) de coordonnées du capteur par rapport à un point (AB) dans le système ($X_M$, $Y_M$, $Z_M$) de coordonnées machine,
- à partir des paramètres déterminés des champs de paramètres, détermination de paramètres de correction de l'articulation tournante (8), sachant que les paramètres de correction comprennent la position relative des axes de rotation et/ou des écarts de position angulaire et/ou des écarts de course.

**9.** Unité articulée rotative selon la revendication 8, **caractérisée en ce que** l'axe de rotation ($a_c$) de l'articulation tournante (8) est aligné à la verticale lors de l'étalonnage du capteur (9).

**10.** Unité articulée rotative selon la revendication 8, **caractérisée en ce qu'**on mesure lors de l'étalonnage des valeurs de mesure qui se répartissent sensiblement uniformément sur la plage de mesure du capteur.

**11.** Unité articulée rotative selon l'une quelconque des revendications 8 à 10, **caractérisée en ce que** le capteur est un palpeur optique effectuant des mesures dans deux dimensions.

**12.** Unité articulée rotative selon l'une quelconque des revendications 8 à 11, **caractérisée en ce que** l'enregistrement des paramètres de correction est effectué pour différentes positions angulaires des autres articulations tournantes (6, 7).

**13.** Unité articulée rotative selon l'une quelconque des revendications 8 à 12, **caractérisée en ce que** les positions de rotation, au moins au nombre de trois, de l'articulation tournante se répartissent sensiblement uniformément sur la plage de rotation de l'articulation tournante (8).

**14.** Unité articulée rotative selon l'une quelconque des revendications 8 à 12, **caractérisée en ce qu'**on utilise dans l'unité de correction le procédé suivant pour effectuer l'étalonnage du capteur (9) :

- détermination, dans le système de coordonnées machine, du centre d'une sphère d'étalonnage (12) dont le rayon est connu
- mesure de points sur la surface de la sphère d'étalonnage (12) avec le capteur (9) à étalonner, sachant que des valeurs de mesure ($s'_i$) sont enregistrées sur de larges parties de la plage de mesure dans au moins une dimension (u, v) pouvant être mesurée par le capteur
- détermination, à partir des valeurs ($s'_i$) de mesure, de paramètres du premier champ de paramètres ($M_S$) qui indique la transformation du système (u, v, w) de coordonnées du capteur dans le système ($X_M$, $Y_M$, $Z_M$) de coordonnées machine et du deuxième champ de paramètres ($p_S$) qui indique le décalage de l'origine du système (u, v, w) de coordonnées du capteur par rapport à un point (AB) dans le système ($X_M$, $Y_M$, $Z_M$) de coordonnées machine, sachant que le centre ($p_K$) et le rayon ($r_K$) de la sphère d'étalonnage sont supposés connus.

**15.** Unité articulée rotative selon la revendication 14, **caractérisée en ce que** l'unité de correction détermine les paramètres du champ de paramètres ($M_S$) en utilisant la relation suivante :

$$\left| p_{o,i} - p_K \right| = r_K$$

où :

$p_{o,i}$ est un point de mesure sur la surface de la sphère d'étalonnage
$p_K$ est le centre de la sphère d'étalonnage
$r_K$ est le rayon de la sphère d'étalonnage

et sachant que, dans la relation, le centre ($p_K$) de la sphère d'étalonnage et le rayon de la sphère d'étalonnage sont supposés connus.

**16.** Unité articulée rotative selon la revendication 15, **caractérisée en ce que** l'unité de correction détermine les paramètres du champ de paramètres ($M_S$) d'après la relation suivante :

$$\left| p_M + p_S + M_S \, s' - p_K \right| = r_K$$

où :

$p_K$ : vecteur au centre de la sphère d'étalonnage dans le système de coordonnées machine
$r_K$ : rayon de la sphère d'étalonnage
$p_M$ : vecteur de l'origine du système de coordonnées machine à un point (AB) dans le bras de mesure de l'appareil de mesure de coordonnées sur lequel est fixé le capteur (9)

$p_s$ : vecteur du point (AB) dans le bras de mesure de l'appareil de mesure de coordonnées à l'origine du système (u, v, w) de coordonnées du capteur

s' : vecteur d'un point de mesure, mesuré dans le système (u, v, w) de coordonnées du capteur, sur la surface de la sphère d'étalonnage

$M_s$ : champ de paramètres (matrice du capteur) qui indique la transformation du système (u, v, w) de coordonnées du capteur dans le système ($X_M$, $Y_M$, $Z_M$) de coordonnées machine.

17. Unité articulée rotative selon l'une quelconque des revendications 8 à 12 ou 14 à 16, **caractérisée en ce que** le capteur (9) est fixé avec possibilité de remplacement sur l'unité articulée rotative (13).

## FIG.1

# FIG.2

# FIG.3

# FIG.4

# FIG.5